# EUROPÄISCHE PATENTSCHRIFT

(11) **EP 1 118 897 B1**
(45) Veröffentlichungstag und Bekanntmachung des Hinweises auf die Patenterteilung: **14.12.2005**
(21) Anmeldenummer: 01100798.6
(22) Anmeldetag: 15.01.2001
(51) Int. Cl.: G02B 26/08

(54) **Deformierbarer Spiegel, insbesondere für eine Laserstrahl-Materialbearbeitungseinrichtung**
Deformable mirror, in particular for a laser beam processing unit
Miroir déformable, en particulier pour usinage de matériaux à faisceau laser

(30) Priorität: 19.01.2000 DE 10001900
(43) Veröffentlichungstag der Anmeldung: 25.07.2001
(73) Patentinhaber: Diehl BGT Defence GmbH & Co.KG, 88662 Überlingen (DE)
(72) Erfinder: Schmiedl, Reinhard, 91781 Weissenburg (DE); Bär, Klaus, 91207 Lauf (DE); Freisleben, Brigitte, Dr., 90411 Nürnberg (DE)
(74) Vertreter: Diehl Patentabteilung

(56) Entgegenhaltungen:
- DE-A- 4 236 355
- US-A- 5 777 807
- PATENT ABSTRACTS OF JAPAN vol. 1997, no. 10, 31. Oktober 1997 (1997-10-31) -& JP 09 142215 A (MURAKAMI CORP), 3. Juni 1997 (1997-06-03)

## Beschreibung

Die Erfindung betrifft einen deformierbaren Spiegel gemäß dem Oberbegriff des Anspruches 1.

Ein derartiger Spiegel ist aus dem nächsten Stand der Technik DE 42 36 355 A1 als adaptiver Membranspiegel innerhalb eines Lasers zur Kompensation thermischer Effekte im Interesse einer Stabilisierung der abgegebenen Laserleistung bekannt. Der Membranspiegel ist konzentrisch zwischen zwei konzentrischen Ringschneiden axial eingespannt, die relativ zueinander durch einen Aktuator verschoben werden können. Die Membran ist vorzugsweise ein monokristalliner Silizium-Wafer aus der Halbleiterfertigung, und als Linearaktuator eignet sich besonders ein piezoelektrisches Stellelement. Die längs des Membranrandes freie Einspannung zwischen den Ringschneiden unterschiedlicher Durchmesser soll gegenüber einer ringsum fest eingespannten Kreisplatte eine besser sphärische Krümmung erbringen. In der Praxis kritisch ist jedoch die Verlagerungsmöglichkeit der Membran zwischen diesen Ringschneiden. Die mögen vernachlässigbar sein bei einer geschützten Anordnung als Endspiegel hinter einem gepumpten Laserstab; im rauen Betrieb insbesondere im Strahlengang einer Laserstrahl-Materialbearbeitungseinrichtung ist aber ein Auswandern der Membran zwischen ihren Ringschneiden nicht auszuschließen, was zu nicht vorhersehbaren unsymmetrischen Verformungen aufgrund der dann exzentrischen Krafteinleitung und darüber wegen Beeinträchtigung der Strahlgeometrie zu einer wesentlichen Reduzierung der verfügbaren Laserleistung führen muss.

Beim erfindungsgemäßen Spiegel wird dagegen insbesondere an einen solchen gedacht, wie er aus der US 5,777,807 A bekannt ist. Derartige Spiegel sind seit Jahren in Laserbearbeitungsmaschinen erfolgreich im Einsatz, um im Strahlweg direkt hinter der Laserquelle die Strahltaille bzw. direkt vor der Fokussieroptik die Geometrie und den Abstand des Fokusfleckes bestimmen und dabei Einflüsse variabler Strahlweglängen kompensieren zu können, wie in der CH 686 032 A5 näher beschrieben.. Wenn allerdings eine vorhandene Laserstrahl-Bearbeitungseinrichtung erst nachträglich mit einem solchen deformierbaren Spiegel als prozessoptimierendem optischem System ausgestattet werden soll, dann kann dessen durch den Linear-Aktuator bedingte rückwärtige Baulänge störend in den Verfahrweg der Handhabungseinrichtungen für die Werkstücke hineinragen. In Hinblick darauf, daß in der Praxis zunehmend mit Laserstrahlen größeren Durchmesser gearbeitet wird, wäre es auch wünschenswert, nicht nur in der engeren Umgebung der mittigen axialen Krafteinleitung in das Zentrum der Spiegelplatte eine angenähert kugelkappenförmig konvexe Ausbeulung der reflektierenden Spiegelplattenoberfläche zu erzielen, sondern auch eine der Sphäre möglichst gut angenäherte Verformung über einen möglichst großen Flächenbereich in der Umgebung des Spiegelplattenmittelpunktes zu erzielen.

Aus diesen Erkenntnissen resultiert die aktuelle technische Problemstellung, den an sich bewährten deformierbaren Spiegel gattungsgemäßer Art noch dahingehend weiterzubilden, daß einerseits eine geringere Bauhöhe für einen vorgegebenen Hub erforderlich ist und andererseits mit diesem Hub über selbst eine größere Spiegelfläche eine bessere sphärisch konvexe Verformung erzielt wird.

Diese Aufgabe ist erfindungsgemäß dadurch gelöst, daß die im Hauptanspruch angegebenen wesentlichen Merkmale erfüllt sind. Danach greift der translatorisch wirkende Aktuator an exzentrischen, bezüglich des Verformungs-Mittelpunktes einander diametral gegenüberliegenden Positionen hinter der Spiegelfläche gegen die Spiegelplatte an. Wegen der Axialhalterung des Randes der Spiegelplatte resultiert aus dieser exzentrischen Krafteinleitung - gegenüber der zentralen - ein Hebeleffekt, der bei gleichem axialem Hub zu stärkerer Auswölbung dem Plattenrand gegenüber, also im Zentralbereich der Spiegelplatte führt, als ein gleicher aber direkt hinter dem Plattenzentrum eingebrachter Hub. Somit genügt nun für gleiche Auslenkung des Plattenzentrums unter sonst gleichen Gegebenheiten eine geringere Baulänge des Aktuators. Außerdem führt die dem Hub entgegenwirkende axiale Randeinspannung der Spiegelplatte im Querschnitt nun in einem vergrößerten Mittenbereich zu einer - verglichen mit der zentralen Krafteinleitung - weniger parabolischen als vielmehr wie gewünscht kreisbogenförmigen Auswölbung der Spiegelfläche von ihrem Zentrum bis weit über den Bereich der exzentrischen Krafteinleitung seitlich hinaus.

Die Folge der exzentrischen Angriffspunkte des Aktuators hinter der Spiegelplatte kann längs einer Spur diskret gestaffelt oder kontinuierlich verlaufen, also als eine Folge von einander benachbarten dünnen Zapfen oder als umlaufender Ring realisiert sein. Die Spur dieser Angriffspunkte und damit die Geometrie des Axial-Querschnitts des Ringes muß nicht kreisförmig sein. Eine ovale Querschnittsgeometrie (quer zur Systemachse durch den Mittelpunkt der Spiegelplatte) führt zu orthogonal unterschiedlichen Krümmungsradien, und dabei weist das Radiusverhältnis 1:2 den großen Vorteil auf, daß selbst bei einem Einfallswinkel von etwa 45° für eine 90°-Strahlumlenkung und trotz runder Spiegelplatte Astigmatismus infolge zwangsläufiger Kompensation von Brennweitenfehlern praktisch vermieden wird.

Zusätzliche Alternativen und Weiterbildungen sowie weitere Merkmale und Vorteile der Erfindung ergeben sich aus nachstehender Beschreibung eines in der Zeichnung unter Beschränkung auf das Wesentliche stark abstrahiert und nicht maßstabsgerecht skizzierten bevorzugten Realisierungsbeispiels zur erfindungsgemäßen Lösung. In der Zeichnung zeigt:
- Fig. 1: die geometrischen Verhältnisse beim Übergang von einer zentralen zu diametral gegenüberliegend dezentralen Krafteinleitungen hinter einer längs ihres Randes axial festgelegten Spiegelplatte und
- Fig. 2: einen grundsätzlichen konstruktiven Aufbau für eine infolge dezentraler Krafteinleitung zentral verformte Spiegelfläche im abgebrochenen Axial-Längsschnitt.

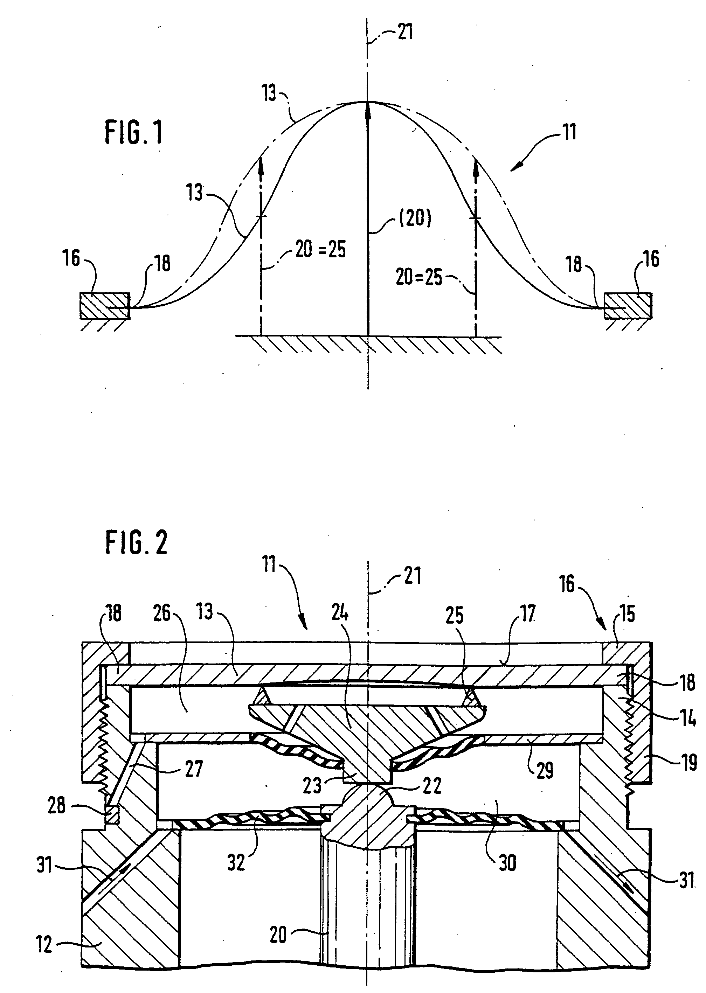

Die strichpunktierte Kurve in Fig. 1 stellt einen Querschnitt durch eine flache Hohlkugelkappe dar, wobei aufgrund starker Maßstabsvergrößerung in der Höhe gegenüber der Breitenskalierung die im Zentralbereich physische Kreisform darstellerisch zur Ellipse wird.

Die ausgezogene Kurve in Fig. 1 stellt die konvexe Ausbeulung einer am Rande in einander diametral gegenüberliegenden Bereichen axial gehalterten Spiegelplatte 13 bei zentraler Krafteinleitung dar. Diese Verformung, die bei einer runden und rundum festgelegten Spiegelplatte 13 nur im Scheitelbereich kreisbogenförmig (also im Dreidimensionalen sphärisch) ist, zeigt gegenüber der idealen Verformungskurve (strichpunktiert in Fig. 1) steilere Flanken.

Wenn dagegen die Krafteinleitung zur Ausbeulung der Spiegelplatte 13 aus der Zentralachse 21 heraus zu einander diametral gegenüberliegenden Seiten verlegt wird, ergibt sich über einen weiten Bereich in der Umgebung des Zentrums eine zunehmende Anschmiegung der (ausgezogen dargestellten) nicht-idealen Verformungskurve an den idealen Verlauf der Sphäre (strichpunktiert mittig in Fig.1) bis kurz vor die axiale Halterung 16 des Randbereiches 18 der Spiegelglatte 13. Diese Approximation an die gewünschte, möglichst ideale Kreis- bzw. Kugelform läßt sich also durch die Lage des diametralen Paares von Angriffspunkten hinter der Spiegelglatte 13 relativ zum Zentrum beeinflussen.

Aufgrund der Hebelwirkung um jeden Aktuator-Angriffspunkt zum Einbringen der achsparallelen Auslenkkraft als dem jeweiligen Hebeldrehpunkt, mit Erstreckung des gemäß Fig.1 unsymmetrisch zweiarmigen Hebels radial bezüglich der bevorzugt runden Spiegelplatte 13 von deren Rand 18 über den Angriffspunkt hinaus zum Plattenzentrum in der Achse 21, bedarf es wie aus Fig.1 ersichtlich für gleiche Höhe der Auswölbung im Plattenzentrum wesentlich weniger Stellhubs seitens des Aktuators 20 (gestrichelte Pfeile in Fig. 1), als bei zentralem Kraftangriff.

Dieses in Fig. 1 skizzierte Funktionsprinzip wird durch einen Spiegel 11 gemäß Fig. 2 realisiert. Er weist stirnseitig vor seinem im wesentlichen dickwandig-rohrförmigen Gehäuse 12 eine aus ihrer (planen oder schon verwölbten) Ruhestellung mehr oder weniger in axialer Richtung verformbare Spiegelplatte 13 auf. Die ist längs ihres Randes 18 vor der im Querschnitt ringförmigen Stirn 14 des Gehäuses 12 in einer axialen Halterung 16 am Gehäuse 12 festgelegt.

Die Spiegelplatte 13 kann aus Laserstrahlen möglichst verlustfrei reflektierendem Metall gegossen oder gearbeitet sein, etwa aus Kupfer. Eine größere Wechselbeanspruchung ohne bleibende Verformung in der Umgebung der Druckeinleitungsbereiche der Platte 13 weist allerdings Feinstruktur-Messing der Art auf, wie es in der DE-PS 3710334 näher beschrieben ist. Unter bestimmten Gesichtspunkten können aus Einkristall wie Silizium geschnittene Scheiben vorteilhaft sein, erforderlichenfalls gemäß DE-OS 3809921 aus einzelnen Elementen zu einer größerflächigen Spiegelplatte 13 verschweißt. Vorzugsweise ist die Spiegelplatte aber als eine Verbundplatte aus hochfest elastischem Trägermaterial auf Kupferbasis mit galvanisch aufgebrachter und diamantgefräster Kupferschicht als Spiegelfläche 17 ausgelegt, weil dann Eigenspannungen weitestgehend vermeidbar sind. Für den Sonderfall besonders kurzwelliger Laserstrahlen etwa der Neodyne-Yag-Laser, die im Bereiche der Material-Oberflächenbehandlung zunehmend an Bedeutung gewinnen, ist aber eine polierte gläserne Spiegelplatte 13 wegen ihrer extrem glatten Oberfläche 17 optimal.

Die strahlseitige Spiegelfläche 17 der jeweiligen Spiegelplatte 13 ist in der Regel nach ihrer mechanischen Bearbeitung planiert und durch dielektrische Bedampfung reflektierend sowie ggf. frequenzselektiv beschichtet.

Dem Zentrum gegenüber liegt die Spiegelplatte 13 mit ihrem in der Regel kreisförmig umlaufenden seitlichen Rand 18 auf der geometrisch entsprechend ringförmigen Stirn 14 des Gehäuse 12 auf. Für die axiale Halterung 16 wird der Rand der 18, der Stirn 14 axial gegenüber, vom radial nach innen flanschförmig umlaufenden Bund 15 einer Überwurfmutter 19 seitlich übergriffen. Diese axiale Halterung 16 ist in axialer Richtung steif, während die Spiegelplatte 13 in radialer Richtung, etwa erwärmungsbedingt, arbeiten kann, um ein radiales Verstauchen, also ein nicht auf axialen Stellhub zurückzuführendes Ausbeulen zu vermeiden.

Für die gesteuerte konvexe Verformung der Spiegelplatte 13 ist koaxial hinter ihr, gegen ihre Rückseite ein seinerseits gegenüberliegend am Gehäuse 12 abgestützter Linear-Aktuator 20 eingespannt, bei dem es sich bevorzugt um eine elektromechanische Piezo-Säule handelt. Deren Auslenkung in Richtung der System-Längsachse 21 wird zwischen einer balligen Kuppe 22 und einem an diese eben angrenzenden Sockel 23 auf einen kegelförmig sich radial aufweitenden Stempel 24 übertragen. Die ballige Anlage der Kappe 22 (die wie skizziert dem Aktuator 20, aber auch dem Stempel 24 konstruktiv zugeordnet sein kann) gegen einen axial benachbart plan berandeten Sockel 23 bewirkt, daß auch dann keine Verkantung - also keine ungewollte asymmetrische Verformung infolge Verkippens der Spiegelplatte 13 aus der Querlage zur zentralen Achse 21 - auftritt, wenn diese Abstützung einmal nicht genau in der Zentralachse 21 liegen sollte.

Der Stempel 24 liegt über einen zapfenförmigen (also unterbrochenen) oder kontinuierlich umlaufenden Ring 25 rückwärts, also der reflektierenden Spiegelfläche 17 gegenüber konzentrisch zur Rand-Halterung 16 gegen die Spiegelplatte 13 an. Deren Abstützung erfolgt somit hier exzentrisch zur zentralen Achse 21, nämlich jeweils an jeweils zwei aneinander diametral gegenüberliegenden Punkten einer unstetigen oder einer infenitesimalen Punktefolge längs der Spur der ringförmigen Abstützung.

Dafür kann der Ring 25 auf dem Stempel 24 angeordnet oder integral mit einem trichterförmigen Stempel ausgebildet sein. Vorzugsweise liegt der Ring 25 mit einer schneidenförmigen Stirnfläche gegen die Rückseite der Spiegelplatte 13 an, wie in der Zeichnung mit dem dreieckförmigen Wandungsquerschnitt dargestellt, um für jeden Hub die gleiche geometrisch definierte Krafteinleitung zu erbringen. Allerdings führen betriebsbedingt nicht immer vermeidbare Harmonisierungsfehler, also ein Versatz des Ringes 25 aus seiner Konzentrizität mit der optischen Achse der Spiegelplatte 13 zu einer Unsymmetrie bei der Auswölbung der Spiegelfläche 17 und so zu Abbildungsfehlern. Um das zu vermeiden ist es zweckmäßiger, den Ring 25 konzentrisch an der Rückseite der Spiegelplatte 13 etwa als kreisringförmig umlaufenden Wulst anzuformen oder auszuarbeiten. Dann kann die Axialsymmetrie der ringförmigen Druckübertragung auf die Spiegelplatte 13 nicht mehr dadurch gestört werden, daß der Aktuator 20 oder sein Druckübertragungs-Stempel 24 eventuell langsam aus der Spiegelachse 21 auswandern.

Eine Längsdehnung des Aktuators 20 führt jedenfalls in allen Durchmesserrichtungen der Spiegelplatte 13 zu derer durch die gestrichelten Pfeile in Fig. 1 dargestellten Beanspruchung und somit zu einer hohlkugelkappenförmigen zentralen Auswölbung der Spiegelfläche 17. Diese flache kuppelartige Verformung in der weiteren Umgebung des Zentrums der Spiegelfläche 17 ist sehr gut sphärisch, wenn der Ring 25 einen kreisförmigen Querschnitt mit einem Durchmesser in der Größenordnung der Hälfte des nutzbaren Durchmessers der Spiegelplatte 13 selbst aufweist. Die Kuppelform läßt sich außer durch den Radius des Ringes 25 auch durch die Stärke der Platte 13 beeinflussen, ibs. auch durch eine über dem Plattenradius variierende Materialstärke, wie in der Zeichnung ebenfalls zur Verdeutlichung axial überhöht durch einen geschwächten Mittenbereich in der Umgebung der zentralen Achse 21 gegenüber der Nachbarschaft zum Plattenrand 18 veranschaulicht.

Auch kann der Spiegelfläche 17 eine permanente Anfangsauswölbung eingeprägt sein, der die Verformungseffekte, die vom Aktuator 20 hervorgerufen werden, dann überlagert sind. Für diese Anfangsauswölbung kann eine vom Aktuator 20 hervorgerufene axiale Vorspannung herangezogen werden, statt dessen oder zusätzlich aber auch die Wirkung des Fluid-Kissens eines statischen Überdrucks in einer Kammer 26 innerhalb und außerhalb des Ringes 25 auf der von der Spiegelfläche 17 abgewandten Rückseite der Spiegelplatte 13. Diese direkt hinter der Spiegelplatte 13 gelegene Druckkammer 26 wird vom Stempel 24 koaxial wenigstens teilweise durchquert, und sie ist mit einem insbesondere gasförmigen oder flüssigen Fluid über einen Füllkanal 27 aufladbar, der dann mittels eines Verschlusses 28 hermetisch versiegelt wird. Die der Spiegelplatte 13 gegenüberliegende biegesteife Rückwand 29 der Kammer 26 ist gerade so elastisch, daß beispielsweise der Zentralbereich der Rückwand 19 die Bewegung des Stempels 24 in axialer Richtung mitmacht, so daß eine über den Ring-Stempel 24 hervorgerufene Ausbeulung der Spiegelplatte 13 nicht gegen einen Unterdruck, der sonst in der Kammer 26 entstehen würde, arbeiten muß.

Der eingelegte bzw. mit dem Stempel 24 oder bevorzugt mit der Spiegelplatte 13 integrale wulstförmige Ring 25 muß keine Kreisform haben. Besonders zweckmäßig ist ein im Querschnitt elliptischer Ring, denn die dann nicht kugelförmige sondern ellipsoide konvexe Verformung der Spiegelfläche 17 vermeidet selbst noch bei großen Strahleinfallswinkeln (wie zur 90°-Umlenkung des Laserstrahles) trotz kreisscheibenförmiger Spiegelplatte 17 Astigmatismus-Fehler, wenn die ein- und ausgehenden Strahlen in der Ebene der Hauptachsen des elliptischen Ringes 25 liegen.

Um die aufgrund nicht-idealer Reflexion in der Spiegelfläche 17 von der Spiegelplatte 13 aufgenommene Verlustwärme abzuführen, ohne daß es zu einem Verformen infolge Aufheizens der Spiegelplatte 13 bzw. einer hinter ihre gelegenen Fluidfüllung der Druckkammer 26 und damit zu einem unreproduzierbaren betriebszeitabhängigen Ausbeulen der Spiegelfläche 17 kommt, liegt hinter der Kammer-Rückwand 29 aus gut wärmeleitendem Material wie Kupfer, Aluminium oder Messing ein Wärmetauscherraum 30, der zwangsweise von einem Kühlmedium 31 durchströmt wird. Der dem Aktuator 20 zugewandte metallene Sockel 33 des Stempels 24 liegt in diesem Kühlmittelstrom und fördert dadurch die großvolumige Wärmeableitung aus der Druckkammer 26 unmittelbar von der Rückseite der Spiegelplatte 13 über den Stempel 24.

Etwaige Druckschwankungen in der extern gepumpten Zwangsströmung des Kühlmediums 31 durch den Wärmetauscherraum 30 übertragen sich dann nicht über die Füllung der Spiegelkammer 26 zu Verformungen auf die Platte 13, wenn ein der Spiegelkammer-Rückwand 29 gegenüberliegender Abschluß 32 etwa in Form einer Ringscheibenmembran gummielastisch biegeweicher ausgeführt ist, als die im Verhältnis dazu biegesteife Spiegelkammer-Rückwand 29. Denn dann führen Druckschwankungen im Kühlmedium 31 beim Durchströmen des Wärmetauscherraumes 30 in erster Linie zu Ausbeulungen des biegeweichen Abschlusses 32, aber praktisch nicht zu Einbeulungen der Spiegelkammer-Rückwand 29.

Bei einem deformierbaren Spiegel 11 mit von einem konzentrisch auf der Rückseite der Spiegelfläche 17 angreifenden Achsial-Aktuator 20 wird also - bei verringertem Aktuator-Hub für gleiche Kuppelhöhe - die Kuppel der konvexen Auswölbung der Spiegelfläche 17 großflächiger und zugleich besser der wünschenswerten Sphäre angenähert, wenn statt einer zentralen Krafteinleitung eine dezentrale Krafteinleitung an einander diametral gegenüberliegenden Stellen gewählt wird. Dafür arbeitet der Aktuator 20 auf einen die - insbesondere bei hohen Laserfrequenzen bevorzugt glasförmige - Spiegelplatte 13 rückwärtig gegen den Aktuator 20 abstützenden Ring 25, der vorzugsweise als umlaufender Wust auf der Rückseite der Spiegelplatte 13 ausgebildet ist. Wenn dieser Ring 25 nicht längs einer kreisförmigen sondern längs einer im Querschnitt elliptischen Spur bei einem großen Durchmesser, der doppelt so groß wie sein kleiner Durchmesser ist, gegen die rund eingefaßte Spiegelplatte 13 anliegt, werden auch bei großen Strahleinfallswinkeln Astigmatismuseffekte zuverlässig vermieden. Die Sphäre der Spiegelfläche 17 läßt sich außer über die Querschnittsgeometrie des Ringes 25 auch über eine zentralsymmetrische Schwächung der Spiegelplatte 13 beeinflussen, sowie durch statischen Überdruck einer fluidgefüllten Kammer 26 hinter der Spiegelplatte 13. In der Spiegelplatte 13 entstehende Verlustwärme wird über die Fluidfüllung der Kammer 26 und deren gut wärmeleitende, relativ biegesteife Rückwand 29 in einen als Wärmesenke dahinter gelegenen Wärmetauscherraum 30 druckabhängig variablen Volumens abgezogen und mit dem Zwangsumlauf eines ihn durchströmenden Kühlmediums 31 abgeführt.

## Patentansprüche

1. Deformierbarer Spiegel (11) mit einem translatorischen Aktuator (20), der gelenkig zwischen der Rückseite einer Spiegelplatte (13) und einem Spiegel-Gehäuse (12) eingespannt ist und durch koaxialen Angriff, an aus der Spiegel-Längsachse (21) radial heraus versetzt einander diametral gegenüberliegenden Positionen, gegen die Rückseite der Spiegelplatte (13) deren gegenüberliegende Spiegelfläche (17) ansteuerungsabhängig sphärisch verwölbt,
**dadurch gekennzeichnet,**
**dass** der Aktuator (20) längs des durchgehenden oder unterbrochenen Umfangs einer Ellipse, deren großer Durchmesser doppelt so groß wie der kleine ist, rückwärtig gegen die Spiegelplatte (13) anliegt, die längs ihres Umfangsrandes (18) auf einer ringförmigen Stirn (14) des Spiegel-Gehäuses (12) axial steif und radial nachgiebig gehaltert (16) ist.

2. Spiegel nach Anspruch 1,
**dadurch gekennzeichnet,**
**dass** zwischen der Rückseite der Spiegelplatte (13) und einem vor dem Aktuator (20) gelegenen Stempel (24) ein elliptischer Ring (25) eingelegt ist.

3. Spiegel nach Anspruch 1,
**dadurch gekennzeichnet,**
**dass** an der Rückseite der Spiegelplatte (13) ein durchgehend oder unterbrochen elliptisch umlaufender Wulst ausgebildet ist, gegen den der Aktuator (20) über einen Stempel (24) anliegt.

4. Spiegel nach einem der vorangehenden Ansprüche,
**dadurch gekennzeichnet,**
**dass** die Anlage gegen die Rückseite der Spiegelplatte (13) längs eines Durchmessers in der Größenordnung von der Hälfte des nutzbaren Durchmessers der Spiegelplatte (13) erfolgt.

5. Spiegel nach einem der vorangehenden Ansprüche,
**dadurch gekennzeichnet,**
**dass** der Aktuator (20) über einen planen Sockel (23) und eine ballige Kuppel (22) gegen die Rückseite der Spiegelplatte (13) anliegt.

6. Spiegel nach einem der vorangehenden Ansprüche,
**dadurch gekennzeichnet,**
**dass** die Spiegelplatte (13) eine über ihren Radius variierende Materialstärke aufweist.

7. Spiegel nach einem der vorangehenden Ansprüche,
**dadurch gekennzeichnet,**
**dass** die Spiegelplatte (13) eine Verbundplatte aus hochfest elastischem Trägermaterial auf Kupferbasis mit galvanisch aufgebrachter und diamantgefräster Kupferschicht als Spiegelfläche (17) ist.

8. Spiegel nach einem der Ansprüche 1 bis 6,
**dadurch gekennzeichnet,**
**dass** die Spiegelplatte (13) eine Glasscheibe ist.

9. Spiegel nach einem der vorangehenden Ansprüche,
**dadurch gekennzeichnet,**
**dass** hinter der Rückseite der Spiegelplatte (13) eine statisch mit Fluid gefüllte Druckkammer (26) und hinter dieser ein von einem Kühlmedium (31) durchströmter Wärmetauscherraum (30) vorgesehen ist.

10. Spiegel nach Anspruch 9,
**dadurch gekennzeichnet,**
**dass** der Wärmetauscherraum (30) zur Druckkammer (26) hin durch eine biegesteife, gut wärmeleitende Kammer-Rückwand (29) und gegenüberliegend durch eine biegeweiche Abschlusswand (32) begrenzt ist.

## Claims

1. Deformable mirror (11) having a translational actuator (20), which is clamped in an articulated manner between the rear side of a mirror plate (13) and a mirror housing (12) and, as a result of coaxial action against the rear side of the mirror plate (13) at diametrically opposite positions offset radially out of the mirror longitudinal axis (21), curves the opposite mirror surface (17) of the said mirror plate (13) spherically as a function of control, **characterized in that** the actuator (20) bears against the rear side of the mirror plate (13) along the continuous or interrupted periphery of an ellipse whose major diameter is twice as large as the minor, the said mirror plate (13) being held (16) along its peripheral edge (18) on an annular front (14) of the mirror housing (12) in an axially stiff and radially compliant manner.

2. Mirror according to Claim 1, **characterized in that** an elliptical ring (25) is inserted in between the rear side of the mirror plate (13) and a plunger (24) placed in front of the actuator (20).

3. Mirror according to Claim 1, **characterized in that** a bead running around elliptically continuously or interruptedly is formed on the rear side of the mirror plate (13), against which bead the actuator (20) bears via a plunger (24).

4. Mirror according to one of the preceding claims, **characterized in that** the contact against the rear side of the mirror plate (13) takes place along a diameter of the order of magnitude of half the useful diameter of the mirror plate (13).

5. Mirror according to one of the preceding claims, **characterized in that** the actuator (20) bears against the rear side of the mirror plate (13) via a flat base (23) and a spherical dome (22).

6. Mirror according to one of the preceding claims, **characterized in that** the mirror plate (13) has a material thickness that varies over its radius.

7. Mirror according to one of the preceding claims, **characterized in that** the mirror plate (13) is a composite plate of highly elastic carrier material based on copper with a copper layer applied by electroplating and diamond-polished as a mirror surface (17).

8. Mirror according to one of claims 1 to 6, **characterized in that** the mirror plate (13) is a glass plate.

9. Mirror according to one of the preceding claims, **characterized in that** behind the rear side of the mirror plate (13) there is provided a pressure chamber (26) filled statically with fluid and, behind the latter, a heat-exchange chamber (30) through which a cooling medium (31) flows.

10. Mirror according to Claim 9, **characterized in that** the heat-exchange chamber (30) is bounded towards the pressure chamber (26) by a flexurally rigid, highly heat-conducting chamber rear wall (29) and on the opposite side by a flexible terminating wall (32).

## Revendications

1. Miroir déformable (11) comprenant un actionneur translatoire (20) qui est monté de manière articulée entre la face arrière d'une plaque de miroir (13) et un boîtier de miroir (12) et cintré de manière sphérique contre la face arrière de la plaque de miroir (13) en fonction de l'excitation de la surface réfléchissante (17) qui lui est opposée par prise coaxiale à des positions diamétralement opposées décalées dans le sens radial par rapport à l'axe longitudinal du miroir (21), **caractérisé en ce que** l'actionneur (20), le long du pourtour continu ou interrompu d'une ellipse dont le diamètre le plus grand est égale au double du petit, repose par l'arrière contre la surface réfléchissante (13) qui est maintenue (16) le long de son bord périphérique (18) sur un front annulaire (14) du boîtier de miroir (12) de manière rigide dans le sens axial et déformable dans le sens radial.

2. Miroir selon la revendication 1, **caractérisé en ce qu'**une bague elliptique (25) est insérée entre la face arrière de la plaque de miroir (13) et un poinçon (24) posé devant l'actionneur (20).

3. Miroir selon la revendication 1, **caractérisé en ce que** sur la face arrière de la plaque de miroir (13) est formé un bourrelet périphérique elliptique continu ou interrompu contre lequel l'actionneur (20) repose par le biais d'un poinçon (24).

4. Miroir selon l'une des revendications précédentes, **caractérisé en ce que** l'application contre la face arrière de la plaque de miroir (13) s'effectue le long d'un diamètre dont l'ordre de grandeur est de la moitié du diamètre utile de la plaque de miroir (13).

5. Miroir selon l'une des revendications précédentes, **caractérisé en ce que** l'actionneur (20) repose contre la face arrière de la plaque de miroir (13) par le biais d'un socle plan (23) et d'un dôme bombé (22).

6. Miroir selon l'une des revendications précédentes, **caractérisé en ce que** la plaque de miroir (13) présente une épaisseur de matériau qui varie sur son rayon.

7. Miroir selon l'une des revendications précédentes, **caractérisé en ce que** la plaque de miroir (13) est une plaque composite en matériau porteur élastique à haute résistance à base de cuivre sur lequel une couche de cuivre faisant office de surface réfléchissante (17) est appliquée par procédé galvanique et fraisée au diamant.

8. Miroir selon l'une des revendications 1 à 6, **caractérisé en ce que** la surface réfléchissante (13) est une plaque en verre.

9. Miroir selon l'une des revendications précédentes, **caractérisé en ce qu'**une chambre pressurisée (26) statique remplie de fluide est prévue derrière la face arrière de la plaque de miroir (13) et un espace d'échange thermique (30) parcouru par un fluide de refroidissement (31) est prévu derrière celle-ci.

10. Miroir selon la revendication 9, **caractérisé en ce que** l'espace d'échange thermique (30) est délimité en direction de la chambre pressurisée (26) par une paroi arrière de chambre (29) rigide bonne conductrice de chaleur et à l'opposé par une paroi de terminaison (32) flexible.
